**Europäisches Patentamt**

**European Patent Office**

**Office européen des brevets**

(19)

(11) Veröffentlichungsnummer: **0 137 117 B1**

(12) # EUROPÄISCHE PATENTSCHRIFT

(45) Veröffentlichungstag der Patentschrift:
28.12.88

(51) Int. Cl.⁴: **B 23 Q 3/157**

(21) Anmeldenummer: **84107336.4**

(22) Anmeldetag: **26.06.84**

(54) Werkzeugwechselvorrichtung mit einer Übergabeeinrichtung für Werkzeugträger.

(30) Priorität: **16.08.83 DE 3329539**

(43) Veröffentlichungstag der Anmeldung:
**17.04.85 Patentblatt 85/16**

(45) Bekanntmachung des Hinweises auf die Patenterteilung:
**28.12.88 Patentblatt 88/52**

(84) Benannte Vertragsstaaten:
**AT BE CH FR GB IT LI LU NL SE**

(56) Entgegenhaltungen:
**DE-A- 2 026 221**
**DE-A- 2 103 741**
**DE-A- 2 617 608**
**DE-A- 2 753 801**
**DE-A- 2 934 395**
**DE-A- 3 239 482**
**DE-B- 1 502 010**
**GB-A- 2 077 150**
**US-A- 4 038 739**
**US-A- 4 216 572**
**US-A- 4 354 306**

(73) Patentinhaber: **Hüller Hille GmbH, Schwieberdinger Strasse 80, D-7140 Ludwigsburg (DE)**

(72) Erfinder: **Jaissle, Hans-Ulrich, Imbröderstrasse 34, D-7140 Ludwigsburg (DE)**
Erfinder: **Hofmann, Manfred, Rechbergstrasse 5, D-7141 Möglingen (DE)**
Erfinder: **Geiger, Dietrich, Kirchstrasse 7, D-7141 Grossbottwar (DE)**

(74) Vertreter: **Beyer, Rudi, Gneisenaustrasse 1, D-4030 Ratingen 6 (Hösel) (DE)**

**Beschreibung**

Die Erfindung betrifft eine Werkzeugwechselvorrichtung mit einer Übergabeeinrichtung für Werkzeugträger, die eine Kreisbewegung zwischen mindestens einer Ablagestellung bzw. Magazinstation und einer Aufnahmestellung ausführt, wobei die Aufnahmestellung einer Antriebseinheit zum Antreiben eines aufgenommenen Werkzeugträgers zugeordnet ist, die Stellbewegungen auf einen radial zur Kreisbahn geführten Schlitten ausführt, und wobei die Übergabeeinrichtung senkrecht zur Kreisbewegung eine Hubbewegung zum Aufnehmen bzw. Ablegen der Werkzeugträger ausführt und mindestens zwei Aufnahmen für Werkzeugträger aufweist.

Es ist bekannt, Werkzeugträger als polygonförmige Aufnahmekörper als insgesamt austauschfähige Einheiten auszugestalten. Diese polygonförmigen Aufnahmekörper weisen an ihren seitlichen Begrenzungsflächen zahlreiche Werkzeugträger zum Aufnehmen von Werkzeugen auf. Der Aufnahmekörper ist um eine zentrische Achse taktweise drehbeweglich, um den jeweiligen Werkzeugträger in Bearbeitungsstellung zu bringen.

Nachteilig ist, dass um einen anderen Aufnahmekörper mit anderen Werkzeugträgern in Arbeitsstellung zu bringen, der gesamte grosse, schwere und sperrige Aufnahmekörper mit Werkzeugträgern von der Bearbeitungsmaschine abgebaut, wegtransportiert und in einem Sammellager abgelegt werden muss, woraufhin ein anderer Aufnahmekörper mit Werkzeugträgern zu der Bearbeitungsmaschine hintransportiert und montiert werden muss. Es muss also stets die gesamte Masse des Aufnahmekörpers mit sämtlichen Werkzeugträgern wegtransportiert werden, wenn dieser gegen einen anderen Aufnahmekörper mit Werkzeugträgern ausgetauscht werden muss. Die Rüstzeiten (Totzeiten) sind dadurch bei diesem System relativ gross.

Im übrigen ist die Anzahl der an ein und demselben Aufnahmekörper vorhandenen Werkzeugträgern, z.B. Bohrköpfe, konstruktiv begrenzt.

Konstruktiv bedingt muss der Aufnahmekörper mit hoher Genauigkeit an der Bearbeitungsmaschine gelagert werden, so dass auch solche Werkzeugträger, die sich nicht in Bearbeitungsstellung befinden, mit grosser Genauigkeit positioniert werden müssen, was ebenfalls nachteilig ist.

Eine Vorrichtung gemäss dem Gattungsbegriff ist durch die DE-A 2 617 608 vorbekannt. Diese vorbekannte Vorrichtung baut sehr hoch und breit, da an einer senkrechten Säule an zwei klauenartig, getrennt anzutreibenden, um die Säule schwenkbaren Greifern die beiden Werkzeugträger angeordnet sind, die auf einer auf dem Boden montierten Bühne abgelegt werden soll, was zusätzlichen Raum beansprucht, zumal der unter der Bühne vorgesehene Raum für die Vorrichtung selbst nicht nutzbar ist. Im übrigen können an der senkrechten Säule immer nur zwei Werkzeugträger bereitgehalten werden. Ausserdem ergeben sich verhältnismässig lange Nebenzeiten, was unwirtschaftlich erscheint.

Durch die DE-A 2 103 741 ist ein ferngesteuerter Bohrrevolverkopf für Werkzeugmaschinen vorbekannt. Hierbei müssen immer sämtliche Werkzeugträger bewegt werden.

Auch für die nicht benötigten, also in Ruhe befindlichen Werkzeugträger (Bohrköpfe) muss die gleiche Genauigkeit eingehalten werden wie für den jeweils in Arbeitsstellung befindlichen Werkzeugträger, weil alle Werkzeugträger revolverförmig an einem Träger befestigt sind, so dass die gesamte Lagerung sehr genau ausgeführt werden muss. Die Anzahl der Werkzeugträger (Kopfzahl) ist durch den Revolverkörper festgelegt und eingeschränkt. Alle Werkzeugträger müssen stets mitbewegt werden. Die Wartung ist problematisch; auch das Lagerproblem ist nicht einfach zu lösen. Die Werkzeugträger sind nicht mit anderen Werkzeugen zu bestücken, wenn sich der Revolverkörper dreht. Das bedeutet, dass auch solche Werkzeugträger (Bohrköpfe) nicht gewartet und/oder mit anderen Werkzeugen bestückt werden können, die sich nicht in Arbeitsstellung befinden.

Sinngemäss das gleiche gilt für den Gegenstand der DE-A 2 934 395. Auch bei dieser Konstruktion müssen sämtliche Werkzeugträger stets mitgeschwenkt werden, wenn sich der Revolverkörper dreht. Die Genauigkeit mit der der Revolverkörper gelagert wird, muss sehr gross sein. Das bedeutet, dass auch alle anderen, nicht in Arbeitsstellung befindlichen Werkzeugträger mit der gleichen Genauigkeit angeordnet werden müssen wie der in Arbeitsstellung befindliche Werkzeugträger. Auch hierbei ist die Zahl der Werkzeugträger durch den Revolverkörper eingeschränkt. Der glockenförmige Revolverkörper muss als Einheit mit den Werkzeugträgern transportiert werden, wobei die nicht in Arbeitsstellung befindlichen Werkzeugträger im Betrieb nicht gewartet werden können, weil sie mitgeschwenkt werden. Ein grosses Problem bildet auch die Steifigkeit der Konstruktion, wegen der Lagerung des schweren Revolverkörpers.

Aus der DE-A 1 502 010 ist es bekannt, zum Werkzeugwechsel von Mehrspindelköpfen auch eine ringförmige Werkzeugwechseleinrichtung vorzusehen.

Der Erfindung liegt die Aufgabe zugrunde, eine Vorrichtung gemäss dem Gattungsbegriff des Patentanspruches 1 so auszugestalten, dass sich bei kurzen Nebenzeiten ein einfacher mechanischer Aufbau erzielen lässt, und nur der jeweils benötigte Werkzeugträger mit seinen Bearbeitungswerkzeugen mit der erforderlichen Genauigkeit fixiert, gespannt und an die Arbeitseinheit angekuppelt zu werden braucht, bei kompakter Bauweise der Vorrichtung. Dabei sollen an einem Bearbeitungszentrum oder an einer Bearbeitungseinheit an sich beliebig viele Werkzeugträger in Bereitschaftsstellung gehalten werden, wobei ohne grössere Transportwege ein problemloses, schnelles Auswechseln von Werkzeugträgern möglich sein soll und immer nur der Werkzeugträger mit seinen Bearbeitungswerkzeugen mit der erforderlichen Genauigkeit fixiert, gespannt und an die Antriebseinheit gekuppelt werden soll, dessen Werkzeuge sich tatsächlich in Arbeitsstellung befinden.

Diese Aufgabe wird durch das Kennzeichen des Patentanspruches 1 gelöst.

Die erfindungsgemässe Vorrichtung passt sich je nach Bearbeitungsaufgabe, Werkstückspektrum und Jahresproduktion unterschiedlichen Flexibilitätsanforderungen an. Sie ist ausbau- und umbaufähig, was sowohl für die Maschine selbst, als auch für ihre Steuerung und Verkettung gilt. Eine erfindungsgemässe Vorrichtung lässt sich demgemäss als Einzelmaschine oder innerhalb eines verketteten Systems oder als Baugruppe, z.B. innerhalb einer Transferstrasse, integrieren.

Im Unterschied zu einem sogenannten Bearbeitungszentrum ist in der Grundkonzeption einer erfindungsgemässen Vorrichtung keine Einzelpindel zum Einwechseln verschiedener Werkzeuge in die Antriebseinheit vorgesehen. Vielmehr werden komplette Werkzeugträger eingewechselt, deren Auslegung der Bearbeitungsaufgabe angepasst ist. Zum Beispiel Fräsköpfe mit kräftiger Lagerung und starrer Werkzeugaufnahme für Messerköpfe. Oder aber Plandrehköpfe, wobei Spindel, Plandrehkopf, Planschiebeantrieb und Wegmessung in diesem Kopf untergebracht sind. Aber auch Einzelspindelköpfe für automatische Wechsel von Einzelwerkzeugen lassen sich bei einer erfindungsgemässen Vorrichtung verwenden. Die Werkzeugträger können automatisch innerhalb eines Bearbeitungszyklus oder halbautomatisch oder manuell beim Umrüsten, je nach der gestellten Anforderung, einwechselbar sein. Dabei ist keine Systembegrenzung auf eine bestimmte Anzahl von Werkzeugträgern gegeben. Das Wechselsystem ist unabhängig von der Grösse der Werkzeugträger und deren Anzahl an sich offen bzw. unbegrenzt. Wichtig sind dabei in allen Fällen die kurzen Zugriffszeiten und kurzen Spanzu-Span-Zeiten.

Vorteilhaft ist weiterhin die gute Zugänglichkeit für den Werkzeugwechsel sowie die gute Zugänglichkeit für die Instandhaltung.

Da sich immer nur ein Werkzeugträger in Arbeitsstellung zu befinden braucht, brauchen Energie- und Medienzuführung nur einmal für den in Arbeitsstellung befindlichen Werkzeugträger vorgesehen zu werden.

Insgesamt lässt sich eine erfindungsgemässe Vorrichtung sehr kompakt bauen, wobei es ohne weiteres möglich ist, die Vorrichtung auch zum Bearbeiten in der X- und in der Y-Achse einzurichten. Darüber hinaus sind mit einer erfindungsgemässen Vorrichtung Tiefbohroperationen, Plandrehoperationen und Prüfvorgänge möglich.

Im Gegensatz zum Stand der Technik werden an das Wechselsystem keine hohen Genauigkeitsanforderungen gestellt, weil nur ein bestimmter, in Arbeitsstellung befindlicher Werkzeugträger von der Antriebseinheit aufgenommen und angekoppelt wird. Deshalb braucht nur in dieser Position die erforderliche Genauigkeit hergestellt zu werden, nicht dagegen für die Werkzeugträger, die sich in Ablagestellung, z.B. rund um die Antriebseinheit, befinden.

Dadurch, dass der Wechselring die Antriebseinheit ringförmig umschliesst, baut die Vorrichtung ausserordentlich kompakt. Durch die besondere Art der Hub- und der Schiebebewegungen, die beim Wechseln von Werkzeugträgern mit einer erfindungsgemässen Vorrichtung durchgeführt werden, ergeben sich ausserordentlich kurze Nebenzeiten, so dass sich eine Vorrichtung gemäss der Erfindung in der Grossserienfertigung mit besonderem Vorteil, beispielsweise in der Automobilindustrie, einsetzen lässt.

Die Patentansprüche 2 bis 6 beschreiben vorteilhafte Ausführungsformen der Erfindung.

Eine Vorrichtung gemäss Patentanspruch 2 ist dadurch gekennzeichnet, dass die Werkzeugträger nur durch Gewichtskraft in Aufnahmekupplungen in den Werkzeugträgeraufnahmen am Wechselring haltbar sind.

Gemäss Patentanspruch 3 ist eine weitere Ausführungsform der Erfindung dadurch gekennzeichnet, dass die Werkzeugträger vom Wechselring in zwei oder mehreren, senkrecht zueinander stehenden Bewegungsrichtungen aufnehmbar sind.

Was die Ausführungsform nach Patentanspruch 4 anbelangt, ist diese dadurch gekennzeichnet, dass die Aufnahme- und Spannelemente sowohl zur Aufnahme im Wechselring als auch in einem Magazin dienen.

Gemäss Patentanspruch 5 ist eine weitere Ausführungsform dadurch gekennzeichnet, dass unterhalb des Wechselringes mindestens ein Winkelhebel mit wenigstens einer Rolle angeordnet ist, wobei der Winkelhebel mit einer Koppelstange mit einem dem Schlitten zugeordneten, zu diesem längsverschieblich geführten Hilfsschlitten verbunden ist, und dass die Rolle in einer Steuerkurve in einer Endstellung einläuft, derart, dass in einer vorbestimmten Endstellung der Hilfsschlitten den Wechselring relativ zur Verschiebungsbewegung des Schlittens durch entgegengesetzte Bewegung des Hilfsschlittens örtlich stillstehen lässt und dass dem Wechselring durch zweckmässig angeordnete nutartige Kurven im Hilfsschlitten od.dgl. mit örtlich angebrachten Führungselementen, z.B. Rollen eine Hubbewegung in zwei entgegengesetzten Richtungen erteilt wird, wobei jeweils zwei oder mehrere nutartige Kurven über einen Teil ihrer Länge, insbesondere unter 45 Grad, parallel zueinander angeordnet sind.

Nach Patentanspruch 6 ist eine Ausführungsform dadurch gekennzeichnet, dass der Antriebseinheit als Y-Achse eine Vertikalführung zugeordnet ist.

In der Zeichnung ist die Erfindung – teils schematisch – an Ausführungsbeispielen veranschaulicht. Es zeigen

Fig. 1 Eine flexible Bearbeitungseinheit in der Seitenansicht;

Fig. 2 Eine Draufsicht zu Fig. 1;

Fig. 3 Eine Ansicht in Richtung des Pfeiles F in Fig. 1;

Fig. 4 bis 26 Weitere Ausführungsformen der Erfindung.

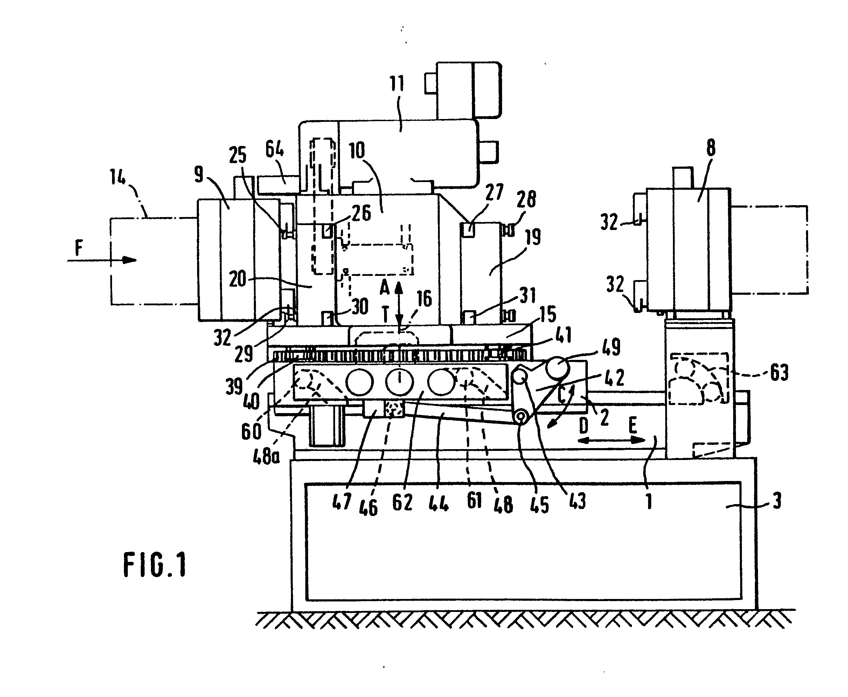

Bei dem Ausführungsbeispiel nach den Fig. 1 bis 3 ist mit dem Bezugszeichen 1 eine bei der dargestellten Ausführungsform horizontal angeordnete Schlittenführung bezeichnet, auf welcher in Richtung D bzw. E ein Schlitten 2 längsverschieblich geführt ist. Die Schlittenführung 1 und Schlitten 2 bilden eine Schlitteneinheit. 62 ist ein gegenüber dem Schlitten 2 in dessen Längsrichtung relativ beweglicher Hilfsschlitten.

Das Bezugszeichen 3 bezeichnet einen bei der dargestellten Ausführungsform ortsfesten Unterbau, auf dem die Schlittenführung 1 angeordnet ist.

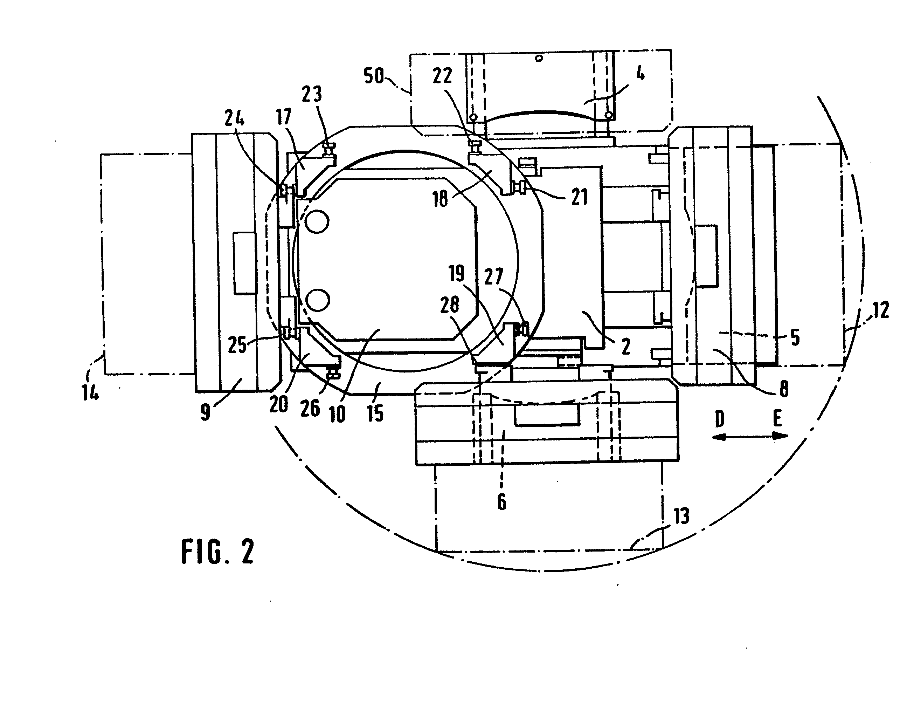

Mit dem Bezugszeichen 4, 5 und 6 sind drei Werkzeugträgerablagen bezeichnet, die an dem Unterbau 3 angeordnet sind. Wie die Fig. 2 erkennen lässt, ist die eine Werkzeugträgerablage 5 in dem einen Endbereich der Schlittenführung 1 angeordnet, während sich je eine Werkzeugträgerablage 4 und 6 auf diametral einander gegenüberliegenden Seiten der Schlittenführung 1, und zwar ausserhalb der senkrechten Projektion des Schlittens 2, jedoch in unmittelbarer Nähe desselben, befinden.

Bei der aus den Fig. 1 bis 3 ersichtlichen Ausführungsform ist auf der Werkzeugträgerablage 5 und auf der Werkzeugträgerablage 6 je ein Werkzeugträger 7 bzw. 8 angeordnet, während die Werkzeugträgerablage 4 bei dieser Ausführungsform (Fig. 2) in dem angenommenen Beispielsfall gerade keinen Werkzeugträger aufnimmt. Hier kann aber ebenfalls ein Werkzeugträger 50 angeordnet sein.

Ein weiterer Werkzeugträger 9 befindet sich in Arbeitsstellung an einer Arbeitseinheit 10, der bei der dargestellten Ausführungsform ein Gleichstromantrieb 11 zugeordnet ist. Werkzeugträger 9 und Antriebseinheit 10 mit Gleichstromantrieb 11 bilden zusammen eine insgesamt bewegliche Gruppe.

Mit strichpunktierten Linien sind bei der aus den Fig. 1 bis 3 ersichtlichen Ausführungsform Werkzeuge angedeutet und mit 12, 13 und 14 bezeichnet. Diese können z.B. Bohrer oder Fräser sein. Es kann eine an sich beliebige Anzahl solcher Werkzeuge vorgesehen werden, so dass die Werkzeugträger 7, 8, 9 und 50 Mehrspindelköpfe, z.B. Mehrspindelbohrköpfe, darstellen können. Die Zeichnung lässt ausserdem erkennen, dass die Werkzeugträger 7, 8, 9 und 50 blockförmig und als insgesamt austauschfähige Baueinheiten ausgebildet sind, die bei sämtlichen dargestellten Ausführungsformen in der Draufsicht eine etwa rechteckförmige Gestalt aufweisen, aber auch z.B. quadratisch, würfelförmig oder in sonstiger geeigneter Weise, z.B. polygonförmig, geformt sein können.

Unterhalb der Antriebseinheit 10 und der Werkzeugträger 7, 8, 9 und 50 ist ein Wechselring 15 mit vertikaler Drehachse 16 angeordnet. Der Wechselring 15 weist bei der aus den Fig. 1 bis 3 ersichtlichen Ausführungsform einstückig mit ihm verbundene, senkrecht nach oben hervorstehende, parallel zur Drehachse 16 sich erstreckende Aufnahmehalter 17, 18, 19 und 20 auf, die bei dieser Ausführungsform in der Draufsicht eine etwa dreieckförmige Gestaltung aufweisen und sich etwa bis zur Oberkante der Antriebseinheit 10 erstrecken.

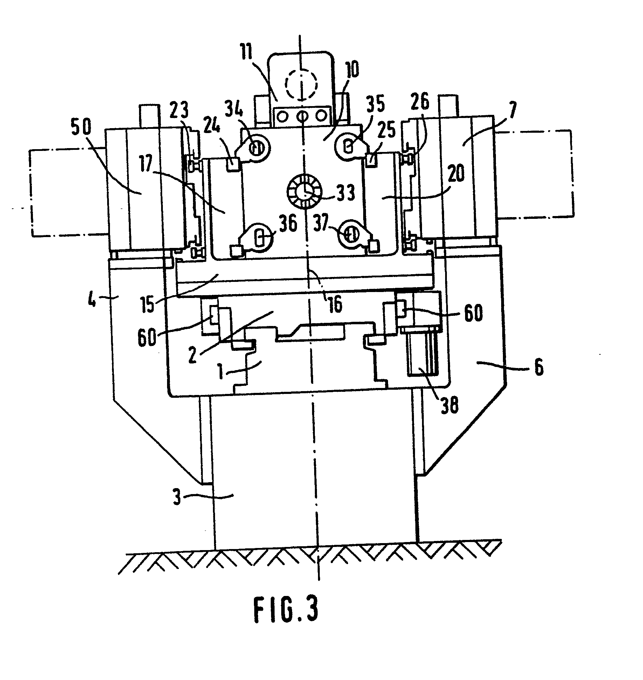

Die Aufnahmehalter 17 bis 20 weisen in jeweils neunzig Grad zueinander versetzten, nach aussen weisenden Ebenen mehrere Aufnahmekupplungen auf, von denen lediglich die Kupplungen 21 bis 31 mit Bezugszeichen versehen sind. Deutlich lassen die Fig. 1 und 3 erkennen, dass an jedem Aufnahmehalter 17 bis 20 mehrere Kupplungen – vorliegend paarweise – in unterschiedlichen Höhenbereichen angeordnet sind. Diese Aufnahmekupplungen 21 bis 31 korrespondieren mit geeigneten Widerlagern, die an den Werkzeugträgern 7, 8, 9 und 50 vorgesehen sind. Von diesen Widerlagern wurden aus Gründen der besseren Übersicht in Fig. 1 lediglich die Widerlager 32 mit Bezugszeichen versehen. Die übrigen Widerlager der Werkzeugträger können entsprechend ausgebildet sein, derart, dass sie mit den zugeordneten Aufnahmekupplungen 21 bis 31 in und ausser Eingriff bringbar sind.

Aus Fig. 3 geht ausserdem hervor, dass die Antriebseinheit 10 eine zentrale Energiezuführung 33 aufweist, über welche der jeweils in Arbeitsstellung befindliche Werkzeugträger, vorliegend der Werkzeugträger 9 und dessen Werkzeuge 14, mit Antriebsenergie zu versorgen sind. Weiterhin weist die Antriebseinheit 10 Aufnahme- und Spannelemente 34, 35, 36 und 37 für die Werkzeugträger auf, über welcher der jeweils in Arbeitsstellung befindliche Werkzeugträger, vorliegend 9, fixiert, gespannt und antreibbar ist.

Mit dem Bezugszeichen 38 ist ein motorischer Antrieb für den Wechselring 15 bezeichnet. Der motorische Antrieb 38 treibt ein im einzelnen nicht dargestellten Ritzel an, das mit einem mit dem Wechselring 15 einstückig verbundenen Zahnkranz 39 kämmt, derart, dass der Wechselring 15 in beiden Drehrichtungen unendlich antreibbar ist. Der Wechselring 15 ist am Umfang durch bei der dargestellten Ausführungsform vertikale Drehachsen aufweisende Rollen geführt, von denen aus Fig. 1 die Rollen 40 und 41 ersichtlich sind. Über den Umfang des Wechselringes 15 können mehrere solcher Rollen zueinander angeordnet sein.

Das Bezugszeichen 42 bezeichnet in Fig. 1 einen Winkelhebel, dessen einer Hebelarm über eine Achse 43 am Schlitten 2 in vertikaler Ebene schwenkbeweglich gelagert ist. Mit dem Winkelhebel 42 ist eine Koppelstange 44 über eine Achse 45, ebenfalls in vertikaler Ebene schwenkbeweglich gekuppelt. Die Koppelstange 44 ist an ihrem dem Winkelhebel 42 abgekehrten Ende über eine Schwenkachse 46 mit einer Kupplung 47 verbunden, die dem Hilfsschlitten 62 zugeordnet ist.

Bei der aus den Fig. 1 bis 3 ersichtlichen Ausführungsform ist nur auf einer Seite der Vorrichtung eine solche aus Winkelhebel 42, Koppelstange 44, Schwenkachse 46 und eine Kupplung 47 bestehende Anordnung vorgesehen. Es steht dem nichts im Wege, auf der anderen Seite der Vorrichtung eine entsprechende Anordnung zu treffen.

Mit 49 ist eine am Ende des Winkelhebels 42 angeordnete, über den Schlitten 2 hervorragende Rolle bezeichnet. 48 und 48a sind schräg unter 45 Grad ansteigende Führungsnuten, die auf beiden Seiten des Hilfsschlittens 62 angeordnet sind und in die auf jeder Seite der Vorrichtung am Schlitten 2 angeordnete Kurvenrolle eingreifen, von denen aus Fig. 1 nur die Kurvenrollen 60, 61 erkennbar sind. Mit 63 ist eine nach unten gekrümmt verlaufende Steuerkurve mit erweitertem Einlauf bezeichnet, in die die Rolle 49 einzulaufen vermag.

Der Winkelhebel 42 ermöglicht zusammen mit der Steuerkurve 63 und den Führungsnuten 48, 48a ein Aufnehmen bzw. ein Auseinanderbewegen der Werkzeugträger zur Antriebseinheit 10 oder ein Ablegen an den Ablagestationen für die Werkzeugträger mit Hilfe des Wechselringes 15. Wenn die Rolle 49 in die Steuerkurve 63 einläuft, wird sie bei Erreichen des nach unten gekrümmten Kurventeils abwärtsgeschwenkt, wodurch der Hilfsschlitten 62 über den Winkelhebel 42, die Koppelstange 44 entgegengesetzt zur Bewegungsrichtung E, also relativ zum Schlitten 2, verschoben wird. Über die horizontalen Kurvenabschnitte erfolgt zunächst eine horizontale Bewegung des Wechselringes 15, während bei Erreichen des schräg verlaufenden Kurventeils der Führungsnuten 48, 48a der Wechselring 15 in Richtung A bewegt wird. Dabei ist die Anordnung so getroffen, dass bei Einlaufen in den schrägen, unter 45 Grad bei der dargestellten Ausführungsform verlaufenden Kurventeil der Wechselring 15 in Bezug auf die Ablagestationen für die Werkzeugträger stillsteht.

Die Wirkungsweise der aus den Fig. 1 bis 3 ersichtlichen Ausführungsform ist folgende:

Um die Leistungsfähigkeit der aus den Fig. 1 bis 3 ersichtlichen Vorrichtung besonders deutlich zu machen, wird angenommen, dass auch auf der Werkzeugträgerablage 4 ein Werkzeugträger aufruht, der mit strichpunktierten Linien dargestellt und mit dem Bezugszeichen 50 bezeichnet wurde.

Ausgangslage für die Bearbeitungsfolge ist die Darstellung gemäss Fig. 1, bei welcher der Werkzeugträger 9 sich in einer Bearbeitungsstellung befindet.

Zum Wechseln des Werkzeugträgers 9 ergibt sich folgende Arbeitsfolge:

1. Die Werkzeugträger 7, 8 und 50 befinden sich in ihren Ablagestellungen auf den Werkzeugträgerablagen 4, 5 bzw. 6.

2. Schlitten 2 und Hilfsschlitten 62 werden motorisch in Richtung E (Fig. 1) mit dem Werkzeugträger 9, der Antriebseinheit 10 und dem Wechselring 15 zurückgefahren.

3. Vor Erreichen der Endstellung wird der Werkzeugträger 9 von der Antriebseinheit 10 automatisch abgekoppelt und von zwei der Aufnahmehaltern 17 bis 20 des Wechselringes 15 übernommen. Beim Verfahren des Schlittens 2 in Richtung E gelangt die Rolle 49 in die Steuerkurve 63, wodurch der Winkelhebel 42 in Richtung C nach unten geschwenkt wird. Dies hat eine entsprechende Verschiebung der Koppelstange 44 in Richtung D und damit eine entsprechende Verschiebung des Hilfsschlittens 62 in Richtung D zur Folge. Da der Hilfsschlitten 62 mit dem Wechselring 15 gekoppelt ist, sind die Bewegungen so aufeinander abgestimmt, dass der Wechselring 15 relativ zur Bewegung des Schlittens 2 stillstehen bleibt. Anschliessend wird der Wechselring 15 in Richtung A angehoben, wobei der Wechselring 15 während seines Hubes A die in Ablagestellung auf den Werkzeugträgerablagen 4 bis 6 befindlichen Werkzeugträger 7, 8 und 50 über seine Aufnahmekupplungen 21 bis 31 aufnimmt und ebenfalls anhebt, so dass die Werkzeugträger 7, 8 und 50 von ihren Werkzeugträgerablagen 4, 5, 6 freikommen.

4. Alsdann wird der Wechselring 15 einschliesslich der Werkzeugträger 7, 8, 9 und 50 um z. B. 90 Grad motorisch gedreht.

5. Daran anschliessend wird der Schlitten 2 in Richtung D motorisch bewegt, wobei der Wechselring 15 während dieser Bewegung in Richtung D des Schlitten 2 einen Hub nach unten, also in Richtung T durchführt, wobei z.B. die Werkzeugträger 7, 8, 9 auf den Werkzeugträgerablagen 4, 5 und 6 abgelegt werden, während der Werkzeugträger 50 zum Aufnehmen abgesenkt wird. Bei einer weiteren Vorwärtsbewegung des Schlitten 2 mit Wechselring 15 in Richtung D wird der Werkzeugträger 50 von der Antriebseinheit 10 übernommen, d.h. fixiert, gespannt und angekuppelt. Daraufhin befindet sich der Werkzeugträger 50 in Arbeitsstellung.

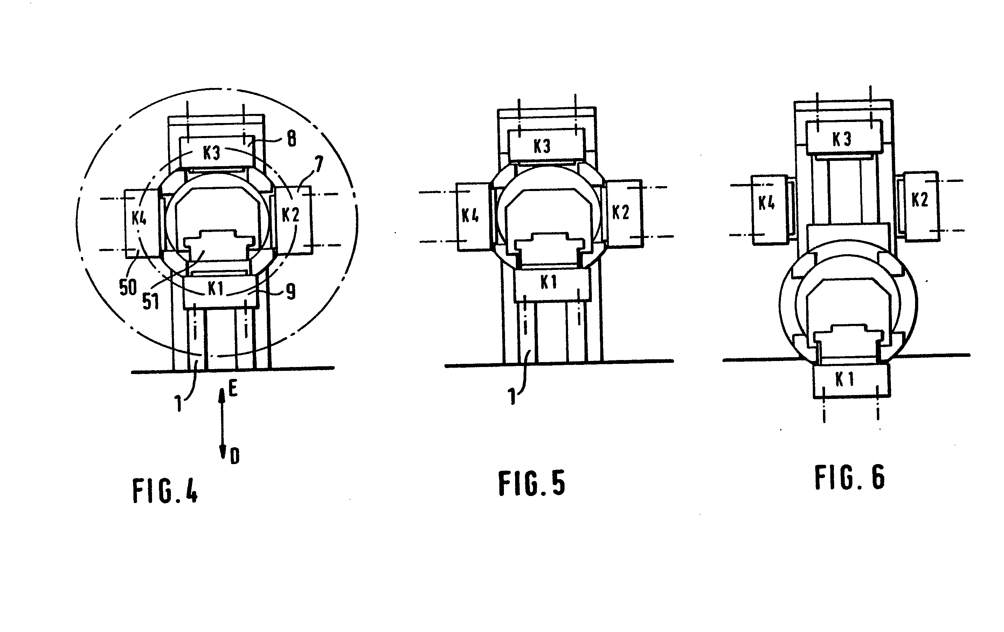

Bei den Ausführungsformen nach den Fig. 4 bis 12 sind für Teile gleicher Funktion die gleichen Bezugszeichen wie bei der vorbeschriebenen Ausführungsform verwendet worden.

Die Ausführungsform nach den Fig. 4 bis 6 unterscheidet sich von der Ausführungsform nach Fig. 1 im wesentlichen dadurch, dass die Vorrichtung zusätzlich in der Y-Achse eine Bearbeitung gestattet. Zu diesem Zweck ist der Antriebseinheit 10 eine Vertikalführung 51 zugeordnet.

Fig. 4 zeigt die Schwenkstellung, während Fig. 5 veranschaulicht, dass die Bearbeitungseinheit, bestehend aus Schlitten 2 und Antriebseinheit 10, in Richtung D relativ zum Wechselring 15 um z. B. 100 mm vorgefahren ist. Danach werden die Werkzeugträger 6, 8 und 50 auf ihren Werkzeugträgerablagen 4, 5 und 6 abgesetzt, während der Werkzeugträger 9 von der Antriebseinheit 10 übernommen, d.h. fixiert, gespannt und gekuppelt wird.

In Fig. 6 ist die Bearbeitungsstellung veranschaulicht, in welcher die Bearbeitungseinheit, bestehend aus Schlitten 2, Wechselring 15, Antriebseinheit 10, Antrieb 11 und Werkzeugträger 9 in Richtung D weiter nach vorn bewegt worden ist.

Sowohl die Ausführungsform nach den Fig. 1 bis 3 als auch die Ausführungsformen nach den Fig. 4 bis 6 können durch externe Speicher im Bereich der Vorrichtung erweitert werden.

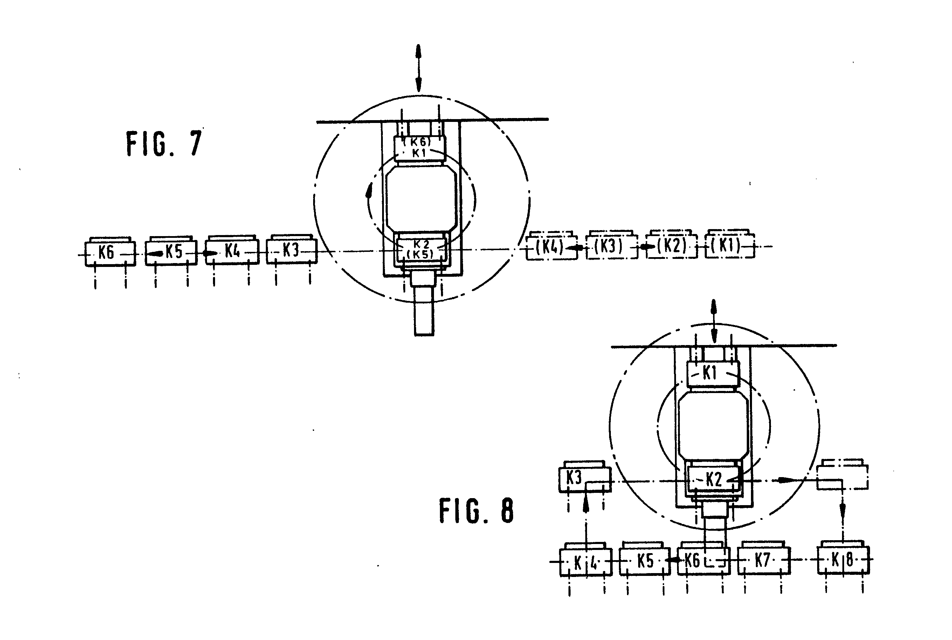

An den Ausführungsformen nach den Fig. 7 bis 12 sind sogenannte Kopfmagazine vorgesehen, in denen weitere Werkzeugträger bereitgestellt sind. Zum Beispiel zeigt die Ausführungsform nach Fig. 7 die Erweiterung des Magazins, bei der für einen zusätzlichen Werkzeugträger zwei zusätzliche Magazinplätze erforderlich sind, und zwar einer links und einer rechts.

Die einzelnen Bearbeitungsköpfe (Werkzeugträger) wurden in Fig. 7 mit dem Bezugszeichen K1 bis K6 bezeichnet.

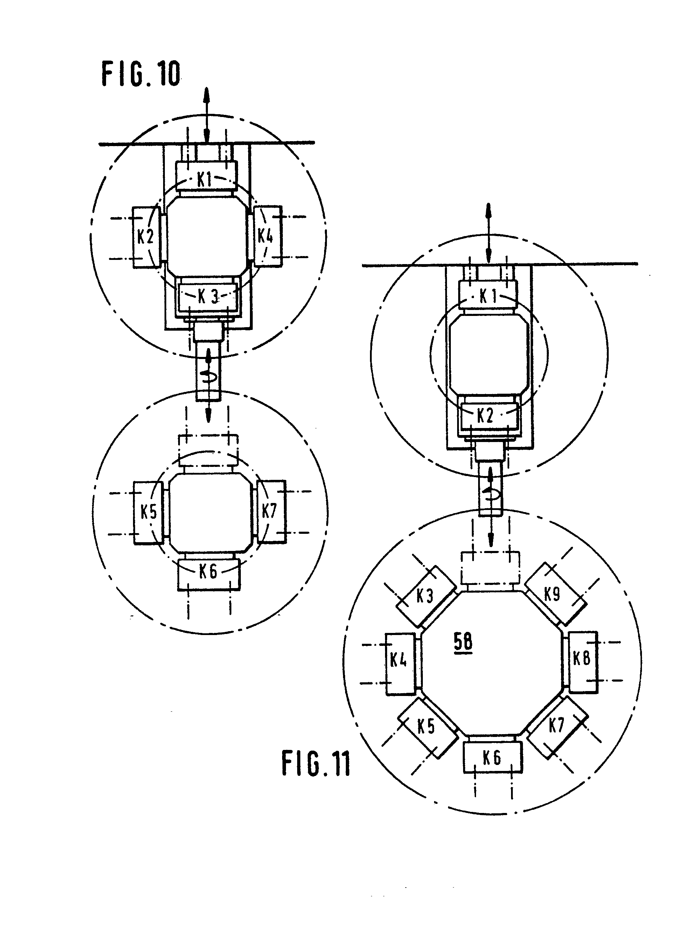

Bei der Ausführungsform nach Fig. 10 sind zwei Vorrichtungen gemäss Fig. 3 miteinander verkettet worden. Die Werkzeugträger wurden abermals mit K1 bis K7 bezeichnet.

Die Ausführungsform nach Fig. 8 zeigt wiederum eine Variante mit einem externen Speicher im Bereich der Vorrichtung, wobei die Werkzeugträger abermals mit dem Bezugszeichen K1 bis K8 bezeichnet wurden.

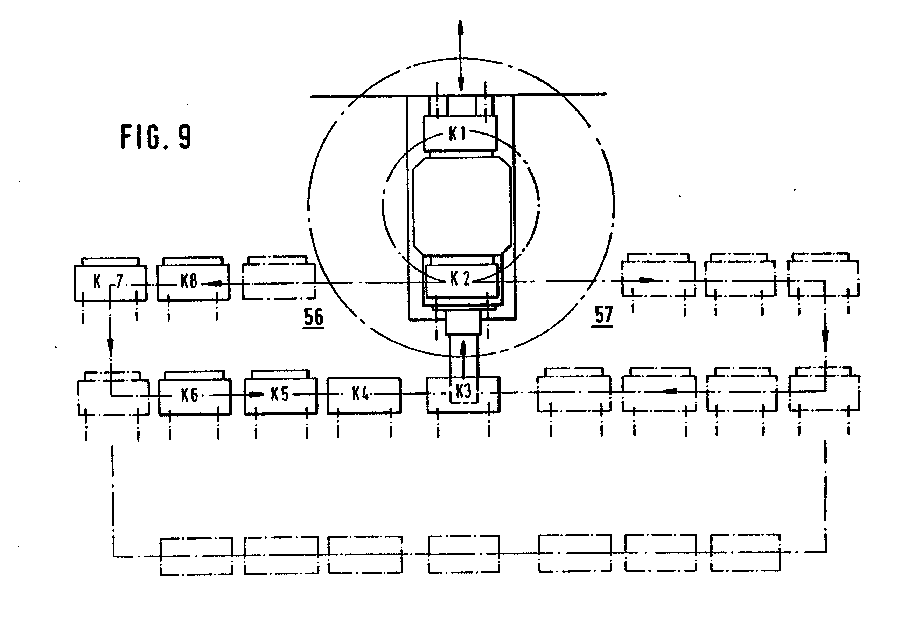

Aus Fig. 9 ist eine Ausführungsform erkennbar, bei der Magazine 56 und 57 erkennbar sind, wobei im Magazin 56 ein Leerplatz und im Magazin 57 mehrere Leerplätze veranschaulicht wurden.

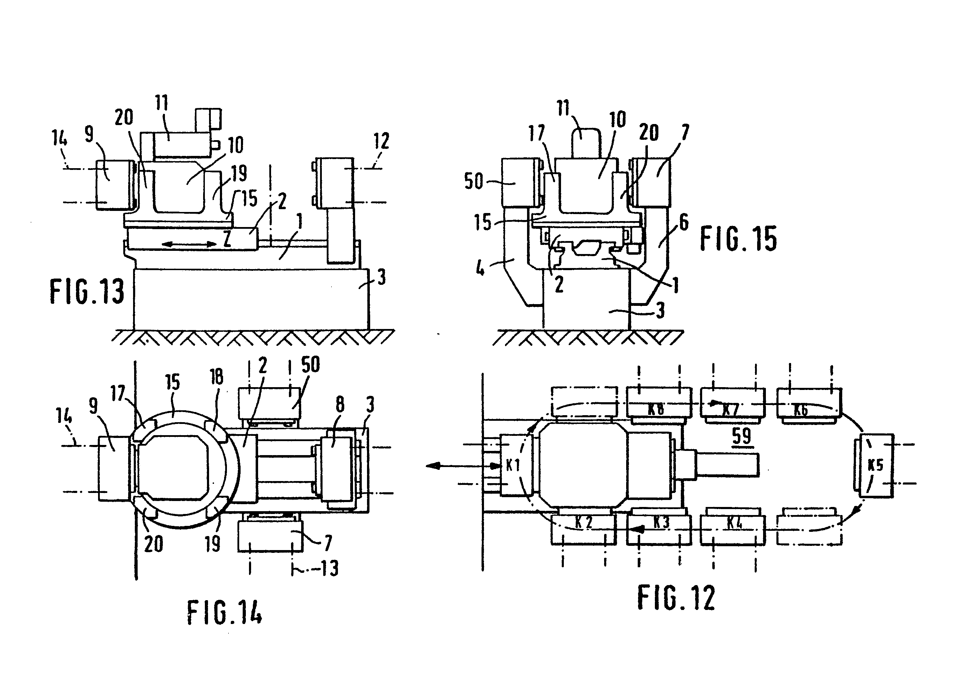

Bei der Ausführungsform nach Fig. 11 ist einer Werkzeugwechselvorrichtung ein Magazin 58 zugeordnet, in dem mehrere Werkzeugträger K3 bis K9 bereitgehalten werden, während sich Werkzeugträger K1 und K2 an der lediglich eine Arbeitsstellung und eine Ablagestellung aufweisenden Vorrichtung befinden, während die Ausführungsform nach Fig. 12 ein Werkzeugträgermagazin 59 Werkzeugträger K1 bis K8 zeigt.

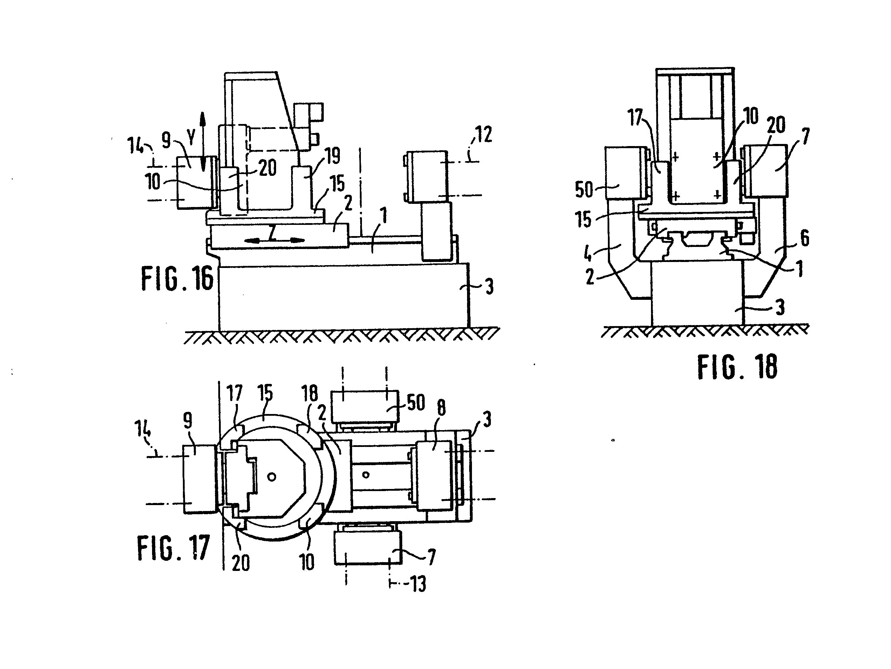

Bei der Ausführungsform nach den Fig. 13 bis 15 sind wiederum für Teile gleicher Funktion die gleichen Bezugszeichen verwendet worden. Bei dieser Ausführungsform ist eine flexible Mehrspindel-Bearbeitungseinheit mit Bearbeitung in Z-Achse veranschaulicht, während die Fig. 16 bis 18 eine Ausführungsform veranschaulichen, bei welcher eine Bearbeitung in Y- und Z-Achse möglich ist.

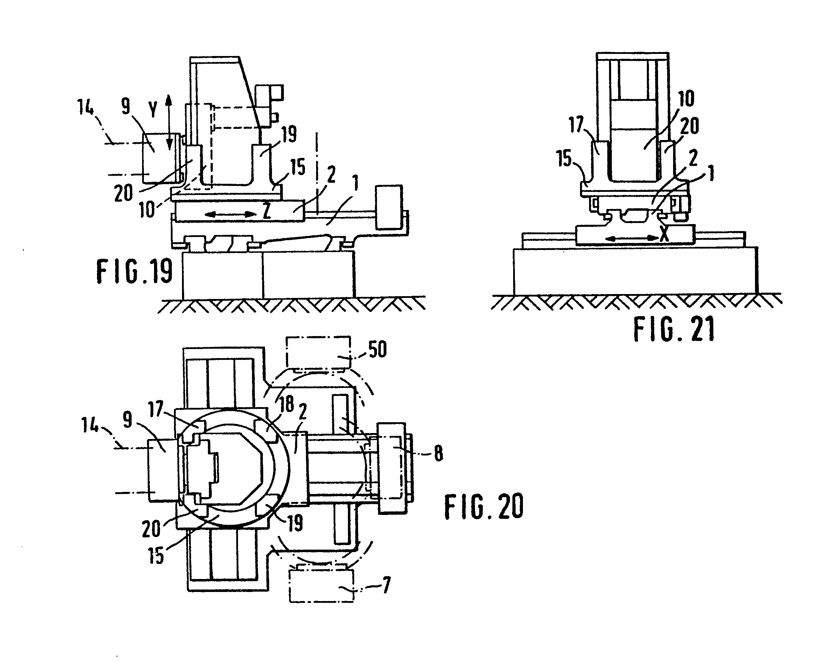

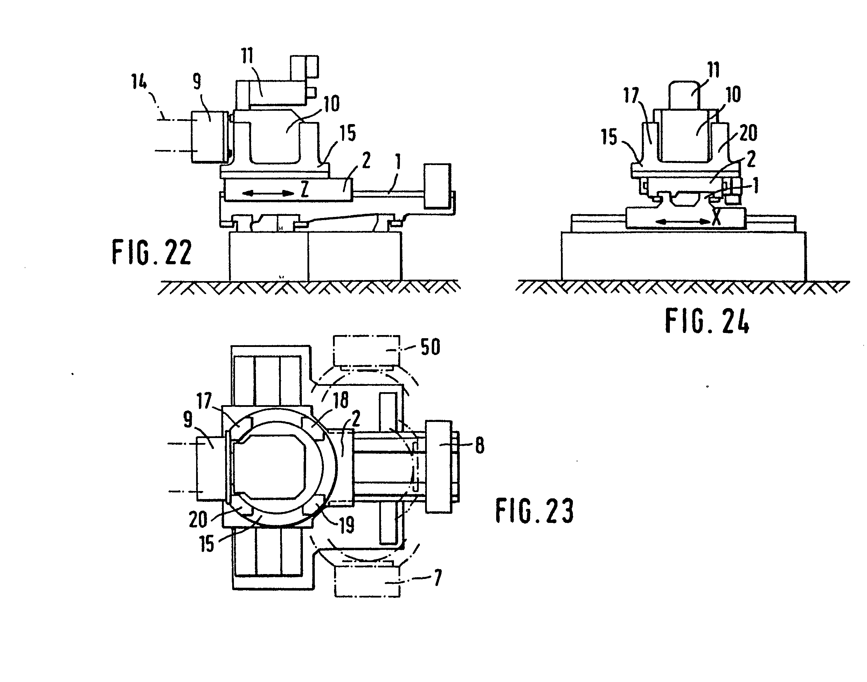

Die Fig. 19 bis 21 zeigen dagegen eine Ausführungsform, bei denen eine Bearbeitung in drei Achsen, also X-, Y- und Z-Achse möglich ist, während die Fig. 22 bis 24 eine Ausführungsform veranschaulichen, bei welcher eine Bearbeitung in X- und Z-Achse gegeben ist.

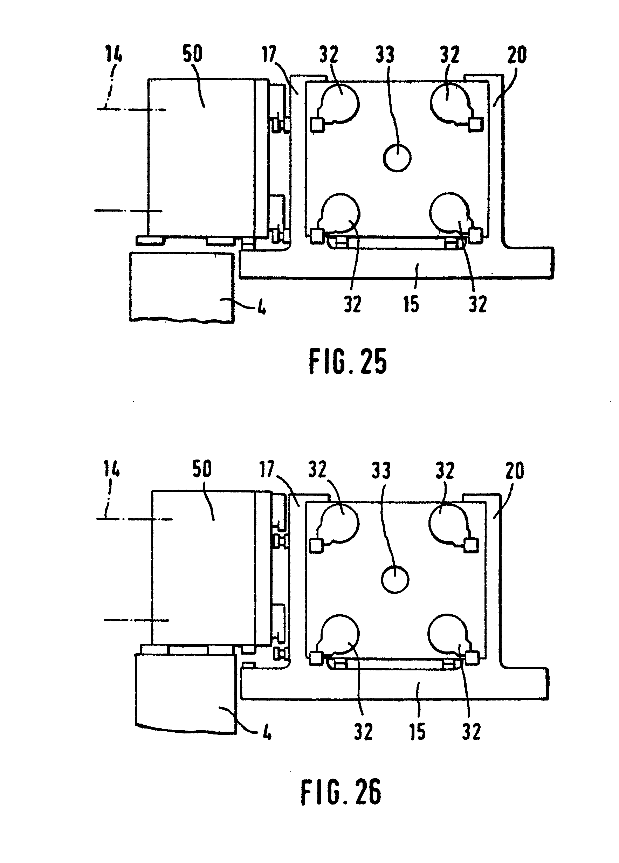

In Fig. 25 ist der Wechselring 15 in angehobener Position, und zwar in Schwenkstellung veranschaulicht, während Fig. 26 die Bearbeitungsstellung bei abgesenktem Wechselring 15 zeigt, in der der vordere Werkzeugträger an der Antriebseinheit 10 angekuppelt, fixiert und gespannt ist.

**Patentansprüche**

1. Werkzeugwechselvorrichtung mit einer Übergabeeinrichtung (15) für Werkzeugträger (7, 8, 9, 50), die eine Kreisbewegung zwischen mindestens einer Ablagestellung (4, 5, 6) bzw. Magazinstation und einer Aufnahmestellung ausführt, wobei die Aufnahmestellung einer Antriebseinheit (10) zum Antreiben eines aufgenommenen Werkzeugträgers (9) zugeordnet ist, die Stellbewegungen auf einen radial zur Kreisbahn geführten Schlitten (2) ausführt, und wobei die Übergabeeinrichtung (15) senkrecht zur Kreisbewegung eine Hubbewegung (A, T) zum Aufnehmen bzw. Ablegen der Werkzeugträger (7, 8, 9, 50) ausführt und mindestens zwei Aufnahmen (17–20) für Werkzeugträger aufweist, dadurch gekennzeichnet, dass die Übergabeeinrichtung als Ring (15) ausgebildet ist, der die Antriebseinheit (10) umgibt und an dessen Umfang die Werkzeugträgeraufnahmen (17–20) fest angeordnet sind, wobei der Ring (15) gemeinsam mit der Antriebseinheit (10) auf dem Schlitten (2) bewegt wird und bei einer Rückzugbewegung zwischen einer Bearbeitungsstellung am Werkstück und der Aufnahmestellung derart angehalten wird, dass er gemeinsam mit dem Werkzeugträger (9) durch eine Relativbewegung gegenüber der weiter zurückfahrenden Antriebseinheit (10) in der Aufnahmestellung stehenbleibt und dabei den Werkzeugträger (9) von der Antriebseinheit (10) löst, und wobei weiteres Zurückfahren der Antriebseinheit (10) eine vertikale Hubbewegung (A, T) des Rings (15) bewirkt derart, dass die abgestellten Werkzeugträger (7, 8, 50) von den Ablagen (4, 5, 6) durch den Ring (15) abgehoben werden, um anschliessend anhand der Kreisbewegung den zuvor betriebenen Werkzeugträger (9) gegen einen anderen Werkzeugträger (7, 8, 50) auszuwechseln, der daraufhin bei entgegengesetzter Stellbewegung der Antriebseinheit (10) in umgekehrter Reihenfolge an diese angekoppelt wird.

2. Vorrichtung nach Anspruch 1, dadurch gekennzeichnet, dass die Werkzeugträger (7, 8, 9, 50) nur durch Gewichtskraft in Aufnahmekupplungen in den Werkzeugträgeraufnahmen am Wechselring (15) halterbar sind.

3. Vorrichtung nach Anspruch 1 oder 2, dadurch gekennzeichnet, dass die Werkzeugträger (7, 8, 9, 50) vom Wechselring (15) in zwei oder mehreren, senkrecht zueinander stehenden Bewegungsrichtungen aufnehmbar sind.

4. Vorrichtung nach Anspruch 1 oder einem der folgenden, dadurch gekennzeichnet, dass die Aufnahme- und Spannelemente (31 bis 34) sowohl zur Aufnahme im Wechselring (15) als auch in einem Magazin dienen.

5. Vorrichtung nach Anspruch 1 oder einem der folgenden, dadurch gekennzeichnet, dass unterhalb des Wechselringes (15) mindestens ein Winkelhebel (42) mit wenigstens einer Rolle (49) angeordnet ist, wobei der Winkelhebel (42) mit einer Koppelstange (44) mit einem dem Schlitten (2) zugeordneten, zu diesem längsverschieblich geführten Hilfsschlitten (62) verbunden ist, und dass die Rolle (49) in einer Steuerkurve (63) in einer Endstellung einläuft, derart, dass in einer vorbestimmten Endstellung der Hilfsschlitten (62) den Wechselring (15) relativ zur Verschiebebewegung des Schlittens (2) durch entgegengesetzte Bewegung des Hilfsschlittens (62) örtlich stillstehen lässt und dass dem Wechselring (15) durch zweckmässig angeordnete nutartige Kurven (48, 48a) im Hilfsschlitten (62) od.dgl. mit örtlich angebrachten Führungselementen, z.B. Rollen (60, 61) eine Hubbewegung (A, T) in zwei entgegengesetzten Richtungen erteilt wird, wobei jeweils zwei oder mehrere nutartige Kurven (48, 48a) über einen Teil ihrer Länge, insbesondere unter 45 Grad, parallel zueinander angeordnet sind.

6. Vorrichtung nach Anspruch 1 oder einem der folgenden, dadurch gekennzeichnet, dass der Antriebseinheit (10) als Y-Achse (51) eine Vertikalführung zugeordnet ist.

## Claims

1. Tool changing device with a transfer facility (15) for tool carriers (7, 8, 9, 50), which executes a circular movement between at least one depot position (4, 5, 6) resp. magazine station and a receiving position, with the receiving position of one drive unit (10) being assigned to drive a received tool carrier (9), the setting movements being carried out on a carriage moving radially to the circular path (2), and with the transfer device (15) executing a lifting motion (A, T) vertical to the circular motion to receive or deposit the tool carrier (7, 8, 9, 50) and having at least two receivers (17–20) for tool carriers, characterised by the transfer device being shaped like a ring (15), that surrounds the drive unit (10) and with the tool carrier receivers (17–20) being firmly located on its circumference, with the ring (15) being moved together with the drive unit (10) on the carriage (2) and being stopped by a reverse movement between a machining point on the workpiece and the receiving position, in such a manner that it remains stationary together with the tool carrier (9) through a relative movement toward an additional returning drive unit (10) in the receiving position and thereby releases the tool carrier (9) from the drive unit (10), whereby further reversal of the drive unit (10) causes a vertical stroke movement (A, T) of the ring (15) in such a way that the deposited tool carriers (7, 8, 50) are raised by the ring (15) from the depots (4, 5, 6) to subsequently change the previously driven tool carrier (9), through the rotary movement, against a different tool carrier (7, 8, 50), which is then coupled to it by an opposing setting movement of the drive unit (10) in the reverse sequence.

2. Device according to Claim 1, characterised by the tool carriers (7, 8, 9, 50) only being retainable through the weight in the mounting couplings in the tool carrier mounts on the exchange ring (15).

3. Device according to Claim 1 or 2, characterised by the tool carriers (7, 8, 9, 50) being receivable from the exchange ring (15) in two or more vertically arranged directions of movement.

4. Device according to Claim 1 or one of the following claims, characterised by the mounting and clamping elements (31 to 34) serving both for receiving in the exchange ring (15) as well as in a magazine.

5. Device according to Claim 1 or one of the following claims, characterised by there being at least one angle lever (42) with at least one roller (49) beneath the exchange ring (15), with the angle lever (42) being connected with a coupling bar (44) with an auxiliary carriage (62) that is longitudinally adjustable in relation to the carriage (2), and that the roller (49) runs into a limit position in a control curve (63) in such a manner that in a predetermined limit position the auxiliary carriage (62) leaves the exchange ring (15) stationary in relation to the adjusting motion of the carriage (2) by an opposite movement of the auxiliary carriage (62) and that the exchange ring (15), through suitably arranged groove type curves (48, 48a) in the auxiliary carriage (62) or by a similar means with locally attached guide elements, e.g. rollers (60, 61), is given a lifting motion (A, T) in two opposite directions, whereby two or more groove type curves (48, 48a) over part of their length, in particular over less than 45 degrees, are arranged parallel to each other.

6. Device according to Claim 1 or one of the following claims, characterised by the drive unit (10) being arranged as the Y-axis (51) of a vertical guide.

## Revendications

1. Dispositif de changement d'outil avec dispositif de transfert (15) pour porte-outils (7, 8, 9, 50), lequel premier dispositif décrit un mouvement circulaire entre au moins une position de dépôt (4, 5, 6) ou poste à magasin, et une position de saisie, cette dernière étant subordonnée à une unité motrice (10) entraînant un porte-outil saisi (9), laquelle unité exécute des mouvements sur un chariot (2) guidé radialement par rapport à la piste circulaire, le dispositif de transfert (15) exécutant un mouvement de levage (A, T), perpendiculaire au mouvement circulaire, pour saisir ou déposer les porte-outils (7, 8, 9, 50) et présentant au moins deux logements (17–20) à porte-outils, caractérisé en ce que le dispositif de transfert a la forme d'un anneau (15) ceinturant l'unité de transfert (10) et sur la circonférence duquel les logements de porte-outils (17–20) sont fermement fixés, l'anneau (15) se déplaçant solidairement de l'unité motrice (10) sur le chariot (2) et, au cours d'un mouvement rétrograde entre la position d'usinage de la pièce et la position de saisie, étant arrêté de telle sorte que, conjointement au porte-outil (9) et par le biais d'un mouvement relatif à l'unité motrice (10) qui poursuit son mouvement rétrograde, s'arrête en position de saisie et sépare ce faisant le porte-outil (9) de l'unité motrice (10), une poursuite du mouvement rétrograde de l'unité motrice (10) provoquant une course verticale (A, T) de l'anneau (15), de telle sorte que les porte-outils déposés (7, 8, 50) sont soulevés de leurs dépôts (4, 5, 6) par l'anneau pour ensuite, par le mouvement circulaire, remplacer le porte-outil précédemment entraîné (9) par un autre porte-outil (7, 8, 50), lequel ensuite, lorsque l'unité motrice (10) se déplace dans le sens opposé, est couplé à cette dernière dans l'ordre chronologique inverse.

2. Dispositif selon revendication 1, caractérisé en ce que les porte-outils (7, 8, 9, 50) ne sont retenus que par leur propre poids dans les accouplements situés dans les logements contre l'anneau de changement (15).

3. Dispositif selon revendication 1 ou 2, caractérisé en ce que les porte-outils (7, 8, 9, 50) peuvent être saisis par l'anneau de changement (15) se déplaçant dans deux ou plusieurs sens perpendiculaires les uns aux autres.

4. Dispositif selon revendication 1 ou l'une des suivantes, caractérisé en ce que les éléments de saisie et de serrage (31 à 34) servent aussi bien à la saisie dans l'anneau de changement (15) que dans un magasin.

5. Dispositif selon revendication 1 ou l'une des suivantes, caractérisé en ce qu'en dessous de l'anneau de changement (15) se trouve au moins un levier coudé (42) comportant au moins un galet (49), le levier (42) étant relié par une tringle (44) à un chariot auxiliaire (62) subordonné au chariot (2) et se déplaçant longitudinalement par rapport à ce dernier, et en ce que le galet (49) entre dans une came de commande (63) dans une position finale, de sorte que dans une position finale déterminée à l'avance, le chariot auxiliaire (62) immobilise localement l'anneau de changement (15), relativement au déplacement du chariot (2), par un mouvement en sens opposé du chariot auxiliaire (62), et de sorte que soit imprimé à l'anneau de changement (15) une course (A, T) dans deux directions opposées par le biais de cames rainurées (48, 48a) judicieusement placées dans le chariot auxiliaire (62) ou assimil., avec des éléments de guidage, des galets par ex., montés localement (60, 61), deux ou plusieurs cames (48, 48a) étant disposées parallèles les unes aux autres sur une partie de leur longueur, en particulier en-dessous de 45 degrés.

6. Dispositif selon revendication 1 ou l'une des suivantes, caractérisée en ce qu'un guide vertical sert à l'unité motrice (10) d'axe Y (51).

FIG.1

FIG. 2

EP 0 137 117 B1

FIG.3

FIG.4    FIG.5    FIG.6

EP 0 137 117 B1

FIG. 7

K6   ←K5   ←K4   ─K3   (K6)
                        K1

                        K2
                        (K5)

(K4)→ (K3)→ (K2)→ (K1)

FIG. 8

K1

K3   ─   K2   ─→

K 4   ─   K5   ←K6   ─   K7   ─   K 8

EP 0 137 117 B1

FIG. 9

# FIG. 10

# FIG. 11

FIG. 15

FIG. 12

FIG. 13

FIG. 14

FIG. 16

FIG. 17

FIG. 18

FIG. 21

FIG. 20

FIG. 19

FIG. 24

FIG. 23

FIG. 22

FIG. 25

FIG. 26